# EUROPEAN PATENT SPECIFICATION

(11) **EP 3 912 471 B1**
(45) Date of publication and mention of the grant of the patent: **26.03.2025**
(21) Application number: 21174305.9
(22) Date of filing: 18.05.2021
(51) Int. Cl.: A21B 1/22

(54) **MULTI-CHAMBER OVEN AND METHOD FOR BAKING FOODS, IN PARTICULAR BAKERY AND CONFECTIONERY PRODUCTS**
MEHRKAMMERBACKOFEN UND BACKPROZESS, INSBESONDERE FÜR BACK- UND SÜSSWAREN
FOUR MULTICHAMBRE ET PROCÉDÉ DE CUISSON D'ALIMENTS, EN PARTICULIER LES PRODUITS DE BOULANGERIE ET DE CONFISERIE

(30) Priority: 20.05.2020 IT 202000011740
(43) Date of publication of application: 24.11.2021
(73) Proprietor: ING. POLIN & C. S.p.A., 37135 Verona (IT)
(72) Inventor: COMETTI, Cesare, 37135 Verona (IT); CUSINARI, Gianluca, 37135 Verona (IT)
(74) Representative: Anselmi, Davide

(56) References cited:
- EP-A1- 2 810 560
- EP-A1- 3 375 288
- US-A- 6 157 008
- US-A1- 2008 083 729

## Description

The present invention relates to a multi-chamber oven for baking foods, in particular bakery and confectionery products, and a method for baking such foods.

In particular, the sector in which the present invention is included is that of electric industrial ovens (for artisan bakeries) for baking bread and confectionery by contact with a baking surface and having a plurality of baking chambers as disclosed in US6157008A and EP2810560A1.

In each baking chamber, the heat is produced by two electrical resistance batteries placed respectively under the baking surface and in the air above the baking surface, at an adequate distance. The heat reaches the product to be baked by conduction from the baking surface (also known as the "bottom") and by radiation and convection from the battery of resistances placed in the air above (also known as the "top").

Currently, some technical solutions are known for controlling the temperature and energy used.

According to a known technical solution, an electrical energy splitter is used. The electrical energy splitter is an instrument that divides the electrical energy between the top and bottom resistances in percentages usually complementary to 100 (or 10) which the user sets as preferred based on the baking results to be obtained (e.g. whether the product needs to be baked more at the top, more at the bottom, etc.).

For example, for baking Puglia style bread a temperature of 240° is set and the splitter can be set with electrical energy use percentages between the top and the bottom of 50/50 or 70/30 along a predefined time cycle. A cycle can for example last 1 minute; therefore, in the case of 50/50 splitting for 30 seconds the bottom resistances operate whereas for the remaining 30 seconds the top resistances operate.

In this way, the top and bottom resistances operate alternately and therefore the rated electrical power demand can be reduced (lower power demand on the provider).

In combination with the splitter, two thermostats are preferably used, one of which for the bottom and one for the top. The temperatures of the top and the bottom are controlled and regulated independently from one another through a dedicated thermocouple. In this way it is possible to regulate the baking to make it stronger or less strong at the top or at the bottom part of the baking chamber.

For example, for baking pizza on the shovel at 350° at the top and 250° at the bottom, it is appropriate to direct most of the electrical energy to the top setting the splitter to 70%top/30%bottom or 75/25.

If in the subsequent baking the pizza needs to be baked in a tray at 300° at the top and 350° at the bottom, as well as changing the set temperatures it is appropriate to re-set the splitter by directing more electrical energy to the bottom (e.g. 40% top and 60% bottom).

Such prior art presents drawbacks connected with the fact that a maximum level of electrical energy to be used by the top and bottom resistances is pre-set for each baking chamber.

Another prior art represented by the document US6157005A shows a domestic oven with a number of baking chambers which implements economization logics of the total energy consumption in the event of exceeding the total pre-installed rated power. However, in that case, it is envisaged that the electric power is re-distributed between the chambers (according to predefined priority logics) only after the detection of exceeding the rated power so as to bring the total power consumption below said rated power.

However, baking, in at least one chamber, at a higher electrical power (superpower) with respect to the maximum level pre-assigned to such chamber is often necessary. With current technology this is not possible, without increasing the total installed rated power of the oven which would, however, have a negative effect on the consumptions and the sizing of the entire electrical energy supply system of the oven.

In this situation, the object of the present invention is to realise an oven and a method for baking foods which obviates the above-cited drawbacks. It is in particular the object of the present invention to realise an oven and a method for baking foods which enables foods to be baked in superpower for at least one chamber without modifying the pre-installed rated power.

The indicated objects are substantially attained by an oven and a method for baking foods according to what is described in the appended claims.

Further characteristics and advantages of the present invention will more greatly emerge from the detailed description that follows of some preferred but not exclusive embodiments of an oven and a method for baking foods illustrated in the appended drawings, in which:
- figure 1 shows a front view of an oven according to the present invention with a plurality of chambers superposed with one another; and
- figure 2 shows a lateral and partially transparent view of the oven of figure 1 with which a generic control diagram according to the present invention has been combined.

With reference to the figures mentioned, the number 1 generally denotes an oven for baking foods 2 according to the present invention.

In particular, the oven 1 is preferably intended for baking bakery and/or confectionery products. However, the oven 1 could also be used for baking other types of foods 2 not expressly indicated herein.

In particular, the oven 1 comprises a plurality of baking chambers 3 wherein each baking chamber is defined at the top by a top wall 4, at the bottom by a baking surface 5, laterally by fixed lateral walls (usually arranged on three sides) and frontally by a door 6 that can be opened for the insertion and removal of foods 2.

In this type of oven, the baking of foods 2 takes place by contact with the baking surface 5. In other words, the foods 2 lie resting on the baking surface 5.

As already set out, for the present invention, the baking surface 5 delimits the baking chamber 3 at the bottom, but in other embodiments it could be suspended with respect to a lower wall which, at that point, delimits the baking chamber 3 itself at the bottom (in this latter case the baking surface 5 is a suspended shelf).

In the preferred case, the baking surface 5 is made of reinforced concrete or stone or steel or other material not expressly indicated herein.

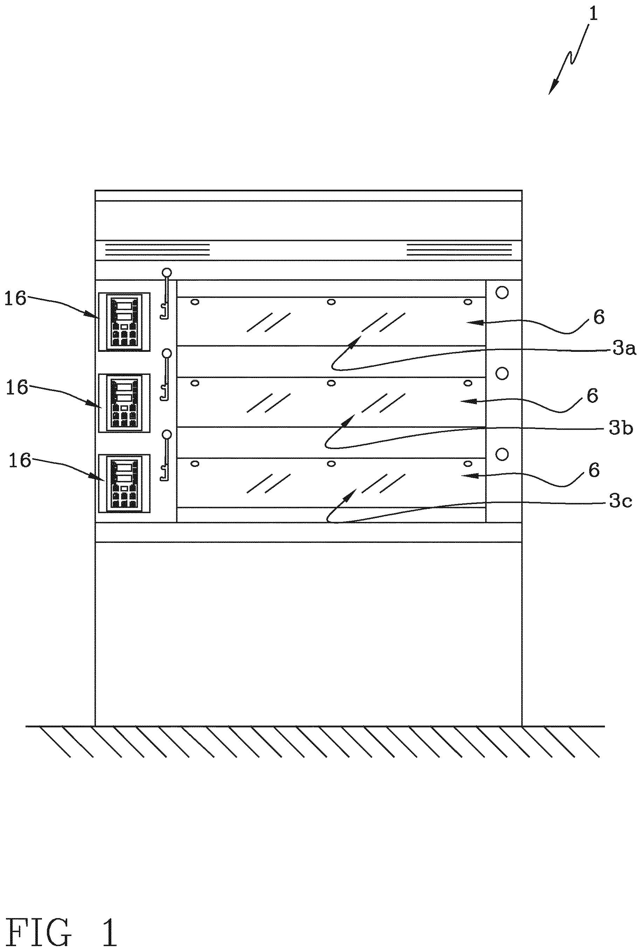

Furthermore, it is to be noted that figure 1 represents three baking chambers identified as 3a, 3b, 3c superposed with one another. However, the present invention relates to an oven 1 which could have two or more baking chambers 3.

In particular, the oven 1 comprises a lower heating means 7 arranged below the baking chamber 5 or inside it (for example incorporated therein). Furthermore, the oven 1 comprises an upper heating means 8 arranged above the baking surface 5 and distanced therefrom by a predefined distance so that the food 2 to be baked is arranged between the baking surface 5 and the upper heating means 8. For example, the upper heating means 8 could be incorporated into the top wall 4 or could be slightly distanced therefrom and therefore be arranged inside the baking chamber 3 itself.

Alternatively, the heating means may be arranged in any other position (not necessarily above or below) with respect to the baking chamber 3 or to the baking surface 5 so as to generate, in any case, heat inside the chamber 3 itself.

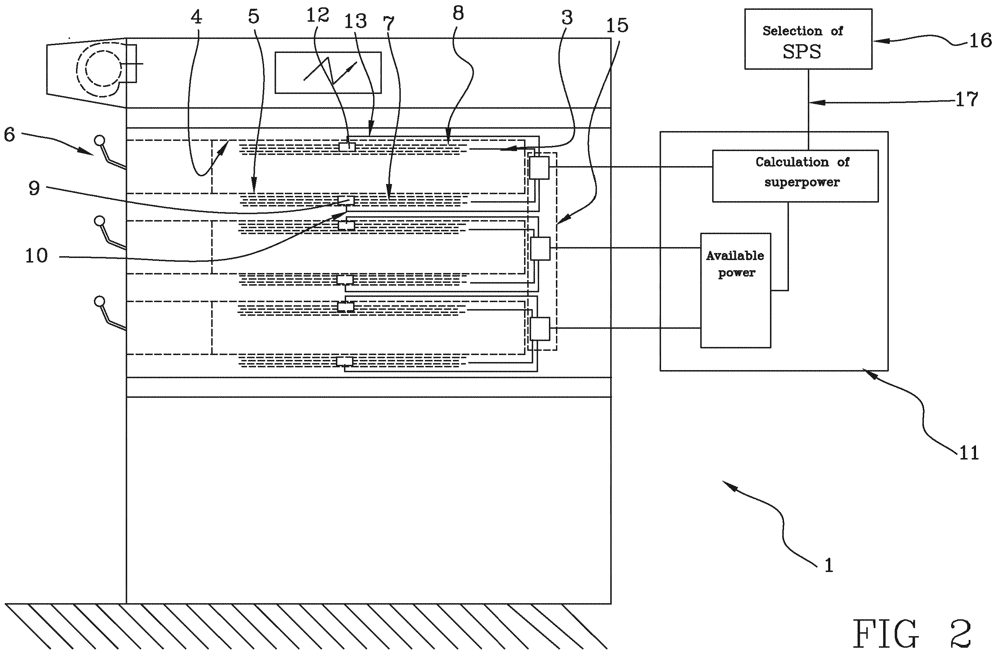

According to the preferred embodiment, the heating means (upper and lower) is of the electrical type. Even more preferably the heating means comprises a battery of electrical resistances (in figure 2 they have been represented by a plurality of parallel lines) for each area of the baking chamber 3 (upper and lower). Such batteries of electrical resistances are electrically powered and generate heat through the passage of electrical current inside them.

Alternatively or in combination with the electrical resistances, the heating means 7, 8 could comprise conduits in which a hot fluid passes (e.g. water) or hot fumes, or anything else not expressly indicated herein.

Furthermore, the oven 1 comprises a lower temperature detector 9 arranged in proximity to the lower heating means 7 and configured to measure the temperature in a lower zone of the baking chamber 3 arranged below or at the baking surface 5.

Such temperature detector 9 is configured to generate a signal 10 for detecting the lower temperature containing data relating to the lower temperature detected and for sending it to a control unit 11 and/or to a splitting member 15 (also defined as "splitter 15" and subsequently described) of the electrical energy.

Additionally, the oven 1 also comprises an upper temperature detector 12 arranged in proximity to the upper heating means 8 and configured to measure the temperature in an upper zone of the baking chamber 3 distanced and arranged above the baking surface 5. Preferably, the upper temperature detector 12 is arranged in proximity to the upper wall such as, for example, in a top corner or in the top at the centre of the upper wall considering the longitudinal direction of the chamber.

Also in this case, the temperature detector is configured to generate a signal 13 for detecting the upper temperature containing data relating to said upper temperature detected and for sending it to the control unit 11 and/or to a splitting member 15 (also defined as "splitter 15" and subsequently described) of the electrical energy.

Preferably, each temperature detector 9, 12 (lower and upper) comprises a thermocouple that detects the temperature of the relative zone of the chamber and generates the detection signal.

Furthermore, the oven 1 comprises an electrical energy splitting member 15 for heating connected to the lower heating means 7 and to the upper heating means 8 and configured to divide the electrical energy between said lower heating means 7 and said upper heating means 8 according to a subdivision value 14.

In other words, the lower 7 and the upper 8 heating means are connected through electrical cables (not visible in the appended figures) to an electrical energy source (e.g. a power socket). The splitting member 15 is interposed along such electrical cables and is configured to subdivide the input electrical energy to the oven 1 between the upper 8 and lower 7 heating means. Therefore, the electrical cables downstream of the splitter 15 (according to the electrical energy input) are subdivided into electrical cables connected to the upper heating means 8 and electrical cables connected to the lower heating means 7.

In other words, the splitting member 15 is arranged upstream of the temperature control circuits (and those for the activation of the respective heating means 7, 8) of the various areas inside the baking chamber.

Furthermore, the electrical energy splitting member 15 is configured to receive from the control unit 11 a subdivision signal 18 containing a subdivision value 14 to be used for a baking cycle. In fact, the heating means (upper and lower) are configured to operate according to one or more baking cycles in which each cycle has a predefined duration (e.g. 1 minute).

It is to be noted that the splitter 15 is preferably configured to subdivide the electrical energy between said lower heating means 7 and said upper heating means 8 over time. In other words, the lower heating means 7 operates for a certain amount of time, after which the upper heating means 8 operates for the remaining time as a function of the total duration of a cycle. In yet other words, the lower 7 or upper heating means, over time, follow on from the upper 8 or lower 7 heating means, respectively.

The subdivision value 14 indicates (usually as a percentage) the operation time of each heating means with respect to the other. In other words, the splitting is preferably performed over time (first one and then the other heating means).

Alternatively, the upper 8 and lower 7 heating means operate simultaneously according to the percentages defined by the subdivision value 14 (in that case the load of the resistances is split).

Therefore, as already mentioned, the oven 1 comprises a control unit 11 connected to the electrical energy splitting member 15 and to the lower 7 and upper heating means.

Additionally, the oven 1 also comprises an external communication interface 16 configured to take in information relating to the (ideal) temperatures set by the user for the upper heating means 8 and for the lower heating means 7 of each chamber.

The lower 7 and upper 8 heating means are, during use, supplied by a predetermined rated power provided by the source of electrical energy. Furthermore, the control unit 11 is configured to divide said rated power into respective pre-assigned power portions (pre-assigned standard) and supplied to each chamber 3.

According to the present invention, the control unit 11 is configured to receive a selection signal 17 of at least one of said chambers (e.g. the chamber 3a), defined as the superpower SPS chamber 3, representative of an operating request at a higher superpower value with respect to the power portion value pre-assigned to such chamber 3. The superpower chamber 3 selected may be any chamber 3 or a specific pre-identified chamber 3 of the oven 1.

Furthermore, there may be more superpower chambers 3 (e.g. two or three) as a function of the requirements.

It is to be noted that the operating demand at a higher superpower value is preferably priority with respect to the energy demand signals of non-SPS chambers. Alternatively, it may be envisaged that such operating demand at a higher superpower value is not priority and therefore the surplus power of the non-SPS chambers is preferably diverted to the SPS chamber.

It is to be noted that the selection signal 17 is independent from a detection of exceeding the total power demanded by the chambers 3 with respect to said predetermined rated power or not. In other words, the selection signal 17 is actively generated (it represents an active choice) and not generated as a function of detecting the total power being exceeded.

Preferably, the selection signal 17 is generated and sent by the operator through a communication interface 16 of the oven 1.

It is also to be noted that the selection signal 17

The control unit 11 is configured to:
- calculate the difference between the demanded superpower value and the power portion value pre-assigned to the chamber 3;
- calculate a total value of instantaneous power unused by the heating means of at least part of the remaining chambers with respect to respective pre-assigned power portions;
- divert at least a part of said value of unused instantaneous power towards the heating means for heating said superpower chamber 3 in order to be able to sustain said superpower value.

In other words, the control unit 11 is configured to satisfy said demand contained in the selection signal 17 regardless of a detection of exceeding the total power demanded by the chambers 3 with respect to said predetermined rated power.

In practice, one chamber 3 is used as the superpower one and is powered higher than the standard unused power values of the other chambers (an example will be provided below).

In particular, the control unit 11 is configured to verify whether said total value of instantaneous power unused by the other chambers compensates for the difference between said demanded superpower value and said power portion value pre-assigned to the superpower chamber 3.

Additionally, the control unit 11 envisages diverting at least a part of said value of instantaneous unused power towards the heating means for heating said superpower chamber 3 and maintaining said demanded superpower value in said superpower chamber 3 for a period of time defined by the contents of the selection signal 17 (predefined times) or by the persistence over time of the selection signal 17 (i.e. when the selection signal 17 is no longer received the chamber 3 returns to operate at said pre-assigned power).

In this case two situations are defined:
if said total value of unused instantaneous power compensates said difference (positive difference), the part of said value of unused instantaneous power to the heating means of said superpower chamber 3 adapted to compensate for the missing superpower is diverted;
if instead said total value of unused instantaneous power does not compensate said difference (negative difference), the control unit 11 is configured to reduce at least one power value supplied to at least part of the remaining chambers in order to increase said total value of unused instantaneous power. In other words, the electric power supplied to the other chambers is reduced in order to be able to supply the superpower chamber 3. In this latter case, the control unit 11 is preferably configured to reduce at least one power value supplied to the remaining chambers in a uniform way with respect to the number of at least part of the remaining chambers.

An example of operation of the oven 1 according to the present invention is illustrated below with some exemplifying values.

Through the communication interface it is possible to select an operating mode, called, for example, "SUPERPOWER SHARING" (SPS).

At this point a pre-chosen chamber 3 (as mentioned above it may be any one or a pre-assigned chamber 3) becomes to all effects a superpower chamber 3 with the possibility to set the power supplied to the top 4 or to the bottom up to 100% independently for the top 4 and for the bottom.

Initially, the control unit 11 records the quantity of surplus power with respect to the pre-assigned power portion (standard) to the users of the chamber (top, mouth and bottom) demanded by the chamber 3 where the SPS is set. For example, if in the SPS chamber 3 a power quantity corresponding to 80% at the top 4 and 70% at the bottom is set, the surplus percentage, i.e. which exceeds 100%, is 50% (the percentages are considered with respect to the standard power pre-assigned to the users).

At that point, the control unit 11 verifies the total quantity of energy not used by the other chambers.

The other chambers can have surplus energy for the following reasons:
- chamber 3 off: free energy = 100%
- chamber 3 temperature beyond the set: free energy = 100%
- chamber 3 with operating mode set for example top 4 40% and bottom 35%: free energy = 25%
- chamber 3 with internal temperature around the set: e.g. if the feedback control has calculated that to maintain the chamber 3 at the right temperature 40% of the energy is required: free percentage = 60%.

By summing the quantities of energy corresponding to all these percentages the surplus quantity of energy of the oven 1 is obtained. Therefore, the control unit 11 subtracts the amount demanded by the SPS chamber from the percentage of surplus energy of the oven 1.

At this point, the two conditions mentioned above can occur.

Condition 1 - if said total value of instantaneous power unused by the other chambers compensates said difference (difference between said superpower value demanded and said power portion pre-assigned to the SPS chamber) it means that there is surplus energy for satisfying the requirements of the SPS chamber.

Example: SPS chamber which requires 80% top 4 and 70% bottom: SPS chamber requires 50% more than the standard.

Let's imagine that the surplus power of the other chambers of the oven 1 for one or more of the reasons listed above is equal to 60%, the calculation is as follows: 60 - 50 = +10 (positive balance).

In this case the control unit 11 enables all the demands.

Condition 2 - if said total value of instantaneous power unused by the other chambers does not compensate said difference (difference between said superpower value required and said power portion pre-assigned to the SPS chamber) it means that there is not enough surplus energy for satisfying the demand of the SPS chamber.

In this case, the control unit 11 makes sure that the demand of the SPS chamber has priority over the others.

Example: SPS chamber which demands 80% top 4 and 70% bottom: SPS chamber demands 50% more than the standard.

Let's imagine that the other chambers of the oven 1 for one or more of the reasons listed above is equal to 30%, the calculation is as follows: 30 - 50 = -20 (negative balance).

In this case, the control unit 11 must obtain the missing 20% from the other chambers by lowering their instantaneous power level. Therefore, the calculation is as follows: 20% / (number of total chambers - 1) = lowering of the instantaneous power level per chamber 3. For example, for an oven 1 with three chambers, the calculation becomes: 20% / (3-1) = 10%.

The control unit 11 will remove 10% absolute value power from the two chambers without SPS.

According to the present invention, the control unit 11 is configured to provide for a manual mode in which said selection signal 17 is sent by the operator through a communication interface 16. In that case, preferably, the selection signal 17 contains information on how much and which unused instantaneous power to divert towards said superpower chamber 3.

Alternatively, the control unit 11 is configured to provide for an automatic mode in which said selection signal 17 is automatically generated according to predefined values.

It is to be noted that, preferably, the control unit 11 is configured to notify the operator (e.g. through the external communication interface 16) before diverting at least a part of said unused instantaneous power (from the oven 1 or from the other chambers without SPS) towards the SPS chamber.

In particular, the control unit 11 is configured to notify the operator and to provide for the manual mode in which the operator has the possibility to choose how to distribute said unused instantaneous power value by favouring one or more chambers without SPS or not.

Alternatively, the control unit 11 is configured to notify the operator and to provide for the automatic mode in which the control unit 11 itself is programmed to define how to distribute said unused instantaneous power value.

The expression "how to distribute" means the quantity of energy to distribute and from which chambers to take it. In fact, both in the automatic and the manual mode some chambers or without SPS may be preferred (or chosen by the operator) for taking energy with respect to others.

The subject matter of the present invention is also a method for baking foods 2 2, in particular bakery and confectionery products in the oven 1 1 described above. In particular, the method follows directly from the above disclosure in relation to the oven 1 1 which is incorporated in its entirety in the following.

The method comprises the following operating steps, preferably actuated during a baking cycle of the foods 2 2:
sharing said rated power into respective pre-assigned power portion values and supplied to each chamber 3;
receiving a selection signal 17 of one of said chambers, defined as a superpower chamber 3, representative of an operating demand at a superpower value that is greater than the power portion value pre-assigned to such chamber 3; said step of receiving said selection signal (17) being performed regardless of a detection of exceeding the total power demanded by the chambers (3) with respect to said predetermined rated power;
calculating the difference between the demanded superpower value and the power portion value pre-assigned to the chamber 3;
calculating a total value of instantaneous power unused by the heating means of at least part of the remaining chambers with respect to respective pre-assigned power portions;
diverting at least a part of said unused instantaneous power value towards the heating means for heating said superpower chamber 3. Preferably, said selection signal 17 is generated and sent by the operator through a communication interface 16.

In yet other words, said step of receiving said selection signal 17 being the result of an active choice of the operator.

In particular, the method comprises a step of verifying whether said total value of unused instantaneous power compensates for the difference between said demanded superpower value and said power portion value pre-assigned to the superpower chamber 3. If said total unused value of instantaneous power does not compensate said difference, there is a step of reducing at least one power value supplied to at least part of the remaining chambers in order to increase said total value of unused instantaneous power.

Preferably, the reduction step envisages reducing at least one power value supplied to at least part of the remaining chambers in a uniform way with respect to the number of at least part of the remaining chambers.

The present invention achieves the set objects.

In particular, the invention enables a superpower chamber 3 to be obtained in which it is possible to have a higher quantity of energy with respect to the standard amount normally available for the chambers. Such quantity of superpower is handled dynamically as a function of the energy available for the other chambers or by temporarily lowering the instantaneous power supplied to the other chambers.

It should further be noted that the present invention is relatively easy to implement and also that the cost for implementation of the invention is not very high.

## Claims

1. An oven (1) for baking foods (2), in particular bakery and confectionery products, comprising:
a plurality of baking chambers for baking foods (2) each comprising a baking surface (5) on which foods (2) to be baked are positioned;
each of said chambers comprising lower heating means (7), of an electrical type, arranged below the baking surface (5), and/or upper heating means (8), of an electrical type, arranged above the baking surface (5) and distanced therefrom by a predefined distance so that the foods (2) to be baked are arranged between the baking surface (5) and the upper heating means (8); said lower and/or upper heating means (7) of the chambers being, in use, supplied by a predetermined rated power that can be provided by a source of electrical energy;
a control unit (11) connected to the lower and/or upper heating means (7) of each chamber (3) and configured to divide said rated power into respective pre-assigned power portions and supplied to each chamber (3);
**characterised in that** the control unit (11) is configured to receive a selection signal (17) of at least one of said chambers, defined as a superpower chamber (3), regardless of a detection of exceeding the total power required by the chambers (3) with respect to said predetermined rated power, wherein said selection signal (17) is representative of an operating demand at a superpower value that is greater than the power portion value pre-assigned to the chamber (3); said control unit (11) being configured to:
- calculate the difference between the superpower value demanded and the power portion value pre-assigned to the chamber (3);
- calculate a total value of instantaneous power unused by the heating means for heating at least part of the remaining chambers with respect to respective pre-assigned power portions;
- divert at least a part of said unused instantaneous power value towards the heating means for heating said superpower chamber (3);
said control unit (11) being configured to include a manual mode wherein it receives the selection signal (17) from an operator via a communication interface (16) on how much and which unused instantaneous power to divert towards said superpower chamber (3); alternatively, said control unit (11) being configured to include an automatic mode in which said selection signal (17) is automatically generated according to predefined values of unused instantaneous power.

2. The oven (1) according to claim 1, **characterised in that** said control unit (11) is configured to verify if said total value of unused instantaneous power compensates the difference between said superpower value demanded and said pre-assigned power portion value to the superpower chamber (3).

3. The oven (1) according to claim 2, **characterised in that** if said total value of unused instantaneous power does not compensate said difference, the control unit (11) is configured to reduce at least one power value supplied to at least a part of the remaining chambers so as to increase said total value of unused instantaneous power.

4. The oven (1) according to claim 3, **characterised in that** the control unit (11) is configured to reduce at least one power value supplied to at least a part of the remaining chambers in a uniform way with respect to the number of at least part of the remaining chambers.

5. The oven (1) according to any one of the preceding claims, **characterised in that** the control unit (11) is configured to send a warning signal to the operator via the external communication interface (16) to advise the operator of said diverting of at least a part of said unused value of instantaneous power towards the heating means for heating said superpower chamber (3).

6. The oven (1) according to any one of the preceding claims, **characterised in that** each of said chambers comprises lower heating means (7) and upper heating means (8).

7. The oven (1) according to any one of the preceding claims **characterised in that** it comprises a splitting member of said pre-assigned power portion values and supplied to each chamber (3), wherein said splitting member is configured to divide said pre-assigned power portion value between the lower heating means (7) and the upper heating means (8) according to a predefined value of division.

8. A method for baking foods (2), in particular bakery and confectionery products, in an oven (1) having a plurality of baking chambers and means for heating of an electrical type (8) which are lower and/or upper with respect to the foods (2) to be baked which are arranged on a baking surface (5) wherein said lower and/or upper heating means (7) of the chambers are, in use, supplied by a predetermined rated power that can be provided by a source of electrical energy; said method comprising steps of:
sharing said rated power in respective pre-assigned power portion values and supplied to each chamber (3);
**characterised in that it** comprises further steps of:
receiving a selection signal (17) of one of said chambers, defined as a superpower chamber (3), representative of an operating demand at a superpower value that is greater than the power portion value pre-assigned to the chamber (3); said step of receiving said selection signal (17) being performed regardless of a detection of exceeding the total power demanded by the chambers (3) with respect to said predetermined rated power;
calculating the difference between the superpower value demanded and the power portion value pre-assigned to the chamber (3);
calculating a total value of instantaneous power unused by the heating means for heating at least part of the remaining chambers with respect to respective pre-assigned power portions;
diverting at least a part of said unused instantaneous power value towards the heating means for heating said superpower chamber (3);
including a manual mode in which said selection signal (17) is received from the operator via the communication interface (16) on how much and which unused instantaneous power to divert towards said superpower chamber (3); alternatively, said method including an automatic mode in which it automatically determines how much and which unused instantaneous power to divert towards said superpower chamber (3).

9. The method according to claim 8, **characterised in that** it comprises a step of verifying if said total value of unused instantaneous power compensates the difference between said superpower value demanded and said pre-assigned power portion value to the superpower chamber (3).

10. The method according to claim 9, **characterised in that** if said total value of unused instantaneous power does not compensate said difference, a step of reducing is included of at least a power value supplied to at least part of the remaining chambers so as to increase said total value of unused instantaneous power.

## Patentansprüche

1. Backofen (1) zum Backen von Nahrungsmitteln (2), insbesondere von Back- und Süßwaren, umfassend:
eine Vielzahl von Backkammern zum Backen von Nahrungsmitteln (2), die jeweils eine Backfläche (5) umfassen, auf der die zu backenden Nahrungsmittel (2) positioniert werden,
wobei eine jede der Backkammern untere Heizmittel (7) eines elektrischen Typs, die unter der Backfläche (5) angeordnet sind, und/oder obere Heizmittel (8) eines elektrischen Typs, die über der Backfläche (5) angeordnet und davon um einen vorbestimmten Abstand beabstandet sind, sodass die zu backenden Nahrungsmittel (2) zwischen der Backfläche (5) und den oberen Heizmitteln (8) angeordnet sind, umfasst, wobei die oberen und/oder die unteren Heizmittel (7) der Kammern beim Gebrauch mit einer vorbestimmten Bemessungsleistung versorgt werden, die durch eine Stromquelle bereitgestellt werden kann;
eine Steuereinheit (11), die mit den unteren und/oder oberen Heizmitteln (7) einer jeden Kammer (3) verbunden und ausgelegt ist, um die Bemessungsleistung in jeweilige im Vorfeld zugeordnete Leistungsabschnitte zu teilen, die einer jeden Kammer (3) zugeführt werden, **dadurch gekennzeichnet, dass** die Steuereinheit (11) ausgelegt ist, um ein Auswahlsignal (17) von mindestens einer der Kammern, die als Superleistungskammer (3) definiert ist, zu empfangen, ungeachtet einer Erfassung des Überschreitens der von den Kammern (3) geforderten Gesamtleistung in Bezug auf die vorbestimmte Bemessungsleistung, wobei das Auswahlsignal (17) für einen Betriebsbedarf bei einem Superleistungswert repräsentativ ist, der größer als der im Vorfeld der Kammer (3) zugeordnete Leistungsabschnittswert ist,
wobei die Steuereinheit (11) ausgelegt ist, um:
- die Differenz zwischen dem geforderten Superleistungswert und dem im Vorfeld der Kammer (3) zugeordneten Leistungsabschnittswert zu berechnen;
- einen Gesamtwert der durch die Heizmittel zum Heizen von mindestens einem Teil der übrigen Kammern in Bezug auf die jeweiligen im Vorfeld zugeordneten Leistungsabschnitte ungenutzten Momentanleistung zu berechnen;
- mindestens einen Teil des ungenutzten Momentanleistungswerts an die Heizmittel zum Heizen der Superleistungskammer (3) abzulenken,
wobei die Steuereinheit (11) ausgelegt ist, um einen manuellen Modus einzuschließen, in dem sie von einem Bediener über eine Kommunikationsschnittstelle (16) das Auswahlsignal (17) darüber, wie viel und welche ungenutzte Momentanleistung an die Superleistungskammer (3) abzulenken ist, empfängt, wobei die Steuereinheit (11) alternativ ausgelegt ist, um einen automatischen Modus einzuschließen, in dem das Auswahlsignal (17) gemäß den vordefinierten Werten ungenutzter Momentanleistung automatisch generiert wird.

2. Ofen (1) nach Anspruch 1, **dadurch gekennzeichnet, dass** die Steuereinheit (11) ausgelegt ist, um zu prüfen, ob der Gesamtwert ungenutzter Momentanleistung die Differenz zwischen dem geforderten Superleistungswert und dem der Superleistungskammer (3) im Vorfeld zugeordneten Leistungsabschnittswert ausgleicht.

3. Ofen (1) nach Anspruch 2, **dadurch gekennzeichnet, dass** die Steuereinheit (11), wenn dieser Gesamtwert ungenutzter Momentanleistung diese Differenz nicht ausgleicht, ausgelegt ist, um mindestens einen, mindestens einem Teil der übrigen Kammern zugeführten Leistungswert zu reduzieren, sodass der Gesamtwert ungenutzter Momentanleistung erhöht wird.

4. Ofen (1) nach Anspruch 3, **dadurch gekennzeichnet, dass** die Steuereinheit (11) ausgelegt ist, um mindestens einen, mindestens einem Teil der übrigen Kammern zugeführten Leistungswert einheitlich in Bezug auf die Zahl von mindestens einem Teil der übrigen Kammern zu reduzieren.

5. Ofen (1) nach einem der vorhergehenden Ansprüche, **dadurch gekennzeichnet, dass** die Steuereinheit (11) ausgelegt ist, um dem Bediener über die externe Kommunikationsschnittstelle (16) ein Warnsignal zu senden, um den Bediener darüber zu informieren, dass mindestens ein Teil des ungenutzten Momentanleistungswerts zu den Heizmitteln zum Heizen der Superleistungskammer (3) abgelenkt wird.

6. Ofen (1) nach einem der vorhergehenden Ansprüche, **dadurch gekennzeichnet, dass** eine jede der Kammern untere Heizmittel (7) und obere Heizmittel (8) umfasst.

7. Ofen (1) nach einem der vorhergehenden Ansprüche, **dadurch gekennzeichnet, dass** er ein Element zur Aufspaltung der im Vorfeld zugeordneten Leistungsabschnittswerte, die einer jeden Kammer (3) zugeführt werden, umfasst, wobei das Aufspaltungselement ausgelegt ist, um den im Vorfeld zugeordneten Leistungsabschnittswert nach einem vordefinierten Aufteilungswert auf die unteren Heizmittel (7) und die oberen Heizmittel (8) aufzuteilen.

8. Verfahren zum Backen von Nahrungsmitteln (2), insbesondere von Back- und Süßwaren, in einem Ofen (1), aufweisend eine Vielzahl von Backkammern und Mittel zum Heizen eines elektrischen Typs (8), die in Bezug auf die zu backenden Nahrungsmittel (2), die auf einer Backfläche (5) angeordnet sind, unten und/oder oben liegen, wobei die unteren und/oder oberen Heizmittel (7) der Kammern beim Gebrauch mit einer vorbestimmten Bemessungsleistung versorgt werden, die durch eine Stromquelle bereitgestellt werden kann, wobei das Verfahren die folgenden Schritte umfasst:
Verteilen der Bemessungsleistung in im Vorfeld zugeordnete Leistungsabschnittswerte, die einer jeden Kammer (3) zugeführt werden,
**dadurch gekennzeichnet, dass** es zudem die folgenden Schritte umfasst:
Empfangen eines Auswahlsignals (17) von einer der Kammern, die als Superleistungskammer (3) definiert ist, das repräsentativ für einen Betriebsbedarf bei einem Superleistungswert ist, der größer ist als der im Vorfeld der Kammer (3) zugeordnete Leistungsabschnittswert, wobei der Schritt zum Empfangen des Auswahlsignals (17) ungeachtet einer Erfassung des Überschreitens der von den Kammern (3) in Bezug auf die vorbestimmte Bemessungsleistung geforderten Gesamtleistung durchgeführt wird;
Berechnen der Differenz zwischen dem geforderten Superleistungswert und dem im Vorfeld der Kammer (3) zugeordneten Leistungsabschnittswert;
Berechnen eines Gesamtwerts von durch die Heizmittel zum Heizen von mindestens einem Teil der übrigen Kammern in Bezug auf die jeweiligen im Vorfeld zugeordneten Leistungsabschnitte ungenutzter Momentanleistung;
Ablenken von mindestens einem Teil des ungenutzten Momentanleistungswerts an die Heizmittel zum Heizen der Superleistungskammer (3);
Einschließen eines manuellen Modus, in dem das Auswahlsignal (17) darüber, wie viel und welche ungenutzte Momentanleistung an die Superleistungskammer (3) abzulenken ist, vom Bediener über die Kommunikationsschnittstelle (16) empfangen wird, wobei das Verfahren alternativ einen automatischen Modus einschließt, in dem es automatisch bestimmt, wie viel und welche ungenutzte Momentanleistung an die Superleistungskammer (3) abzulenken ist.

9. Verfahren nach Anspruch 8, **dadurch gekennzeichnet, dass** es einen Schritt zum Prüfen, ob der Gesamtwert ungenutzter Momentanleistung die Differenz zwischen dem geforderten Superleistungswert und dem der Superleistungskammer (3) im Vorfeld zugeordneten Leistungsabschnittswert ausgleicht, umfasst.

10. Verfahren nach Anspruch 9, **dadurch gekennzeichnet, dass** ein Schritt zum Reduzieren von mindestens einem, mindestens einem Teil der übrigen Kammern zugeführten Leistungswert, wenn der Gesamtwert ungenutzter Momentanleistung diese Differenz nicht ausgleicht, eingeschlossen ist, sodass der Gesamtwert ungenutzter Momentanleistung erhöht wird.

## Revendications

1. Four (1) de cuisson d'aliments (2), en particulier les produits de boulangerie et de confiserie, comprenant :
une pluralité de chambres de cuisson de cuisson d'aliments (2) comprenant chacune une surface de cuisson (5) sur laquelle les aliments (2) à cuire sont positionnés ;
chacune desdites chambres comprenant des moyens de chauffage inférieurs (7), de type électrique, disposés sous la surface de cuisson (5), et/ou des moyens de chauffage supérieurs (8), d'un type électrique, disposés au-dessus de la surface de cuisson (5) et espacés de celle-ci d'une distance prédéfinie de sorte que les aliments (2) à cuire sont disposés entre la surface de cuisson (5) et les moyens de chauffage supérieurs (8) ; lesdits moyens de chauffage inférieurs et/ou supérieurs (7) des chambres étant, en utilisation, alimentés par une puissance nominale prédéterminée qui peut être fournie par une source d'énergie électrique ;
une unité de commande (11) reliée aux moyens de chauffage inférieurs et/ou supérieurs (7) de chaque chambre (3) et configurée pour diviser ladite puissance nominale en portions de puissance pré-assignées respectives et fournies à chaque chambre (3) ;
**caractérisé en ce que** l'unité de commande (11) est configurée pour recevoir un signal de sélection (17) d'au moins une desdites chambres, définie comme une chambre de superpuissance (3), indépendamment d'une détection de dépassement de la puissance totale requise par les chambres (3) par rapport à ladite puissance nominale prédéterminée, où ledit signal de sélection (17) est représentatif d'une demande de fonctionnement à une valeur de superpuissance qui est supérieure à la valeur de portion de puissance pré-assignée à la chambre (3) ; ladite unité de commande (11) étant configurée pour :
- calculer la différence entre la valeur de superpuissance demandée et la valeur de portion de puissance pré-assignée à la chambre (3) ;
- calculer une valeur totale de la puissance instantanée inutilisée par les moyens de chauffage pour chauffer au moins une partie des chambres restantes par rapport aux portions de puissance pré-assignées respectives ;
- détourner au moins une partie de ladite valeur de puissance instantanée inutilisée vers les moyens de chauffage pour chauffer ladite chambre de superpuissance (3) ;
ladite unité de commande (11) étant configurée pour inclure un mode manuel dans lequel elle reçoit le signal de sélection (17) d'un opérateur via une interface de communication (16) sur la quantité et la puissance instantanée inutilisée à détourner vers ladite chambre de superpuissance (3) ; alternativement, ladite unité de commande (11) étant configurée pour inclure un mode automatique dans lequel ledit signal de sélection (17) est automatiquement généré selon des valeurs prédéfinies de puissance instantanée inutilisée.

2. Four (1) selon la revendication 1, **caractérisé en ce que** ladite unité de commande (11) est configurée pour vérifier si ladite valeur totale de puissance instantanée inutilisée compense la différence entre ladite valeur de superpuissance demandée et ladite valeur de portion de puissance pré-assignée nous à la chambre de superpuissance (3).

3. Four (1) selon la revendication 2, **caractérisé en ce que** si ladite valeur totale de puissance instantanée inutilisée ne compense pas ladite différence, l'unité de commande (11) est configurée pour réduire au moins une valeur de puissance fournie à au moins une partie des chambres restantes de manière à augmenter ladite valeur totale de puissance instantanée inutilisée.

4. Four (1) selon la revendication 3, **caractérisé en ce que** l'unité de commande (11) est configurée pour réduire au moins une valeur de puissance fournie à au moins une partie des chambres restantes d'une manière uniforme par rapport au nombre d'au moins une partie des chambres restantes.

5. Four (1) selon l'une quelconque des revendications précédentes, **caractérisé en ce que** l'unité de commande (11) est configurée pour envoyer un signal d'avertissement à l'opérateur via l'interface de communication externe (16) pour informer l'opérateur dudit détournement d'au moins une partie de ladite valeur inutilisée de puissance instantanée vers les moyens de chauffage pour chauffer ladite chambre de superpuissance (3) .

6. Four (1) selon l'une quelconque des revendications précédentes, **caractérisé en ce que** chacune desdites chambres comprend des moyens de chauffage inférieurs (7) et des moyens de chauffage supérieurs (8).

7. Four (1) selon l'une quelconque des revendications précédentes, **caractérisé en ce qu'**il comprend un élément de division desdites valeurs de portion de puissance pré-assignées et fournies à chaque chambre (3), dans lequel ledit élément de division est configuré pour diviser ladite valeur de portion de puissance pré-assignée entre le moyen de chauffage inférieur (7) et le moyen de chauffage supérieur (8) selon une valeur prédéfinie de division.

8. Procédé de cuisson d'aliments (2), en particulier les produits de boulangerie et de confiserie, dans un four (1) ayant une pluralité de chambres de cuisson et des moyens de chauffage d'un type électrique (8) qui sont inférieurs et/ou supérieurs par rapport aux aliments (2) à cuire qui sont disposés sur une surface de cuisson (5), dans lequel lesdits moyens de chauffage inférieurs et/ou supérieurs (7) des chambres sont, en utilisation, alimentés par une puissance nominale prédéterminée qui peut être fournie par une source d'énergie électrique ; ledit procédé comprenant les étapes de :
partager ladite puissance nominale en valeurs de portion de puissance pré-assignées respectives et fournies à chaque chambre (3) ;
**caractérisé en ce qu'**il comprend d'autres étapes de :
recevoir un signal de sélection (17) de l'une desdites chambres, définie comme une chambre de superpuissance (3), représentatif d'une demande de fonctionnement à une valeur de superpuissance qui est supérieure à la valeur de portion de puissance pré-assignée à la chambre (3) ; ladite étape consistant à recevoir ledit signal de sélection (17) étant effectuée indépendamment d'une détection de dépassement de la puissance totale demandée par les chambres (3) par rapport à ladite puissance nominale prédéterminée ;
calculer la différence entre la valeur de superpuissance demandée et la valeur de portion de puissance pré-assignée à la chambre (3) ;
calculer une valeur totale de la puissance instantanée inutilisée par les moyens de chauffage pour chauffer au moins une partie des chambres restantes par rapport aux portions de puissance pré-assignées respectives ; détourner au moins une partie de ladite valeur de puissance instantanée inutilisée vers les moyens de chauffage pour chauffer ladite chambre de superpuissance (3) ;
incluant un mode manuel dans lequel ledit signal de sélection (17) est reçu de l'opérateur via l'interface de communication (16) sur la quantité et la puissance instantanée inutilisée à détourner vers ladite chambre de superpuissance (3) ; alternativement, ledit procédé incluant un mode automatique dans lequel il détermine automatiquement la quantité et la puissance instantanée inutilisée à détourner vers ladite chambre de superpuissance (3).

9. Procédé selon la revendication 8, **caractérisé en ce qu'**il comprend une étape consistant à vérifier si ladite valeur totale de puissance instantanée inutilisée compense la différence entre ladite valeur de superpuissance demandée et ladite valeur de portion de puissance pré-assignée à la chambre de superpuissance (3) .

10. Procédé selon la revendication 9, **caractérisé en ce que** si ladite valeur totale de puissance instantanée inutilisée ne compense pas ladite différence, une étape est incluse consistant à réduire d'au moins une valeur de puissance fournie à au moins une partie des chambres restantes de manière à augmenter ladite valeur totale de puissance instantanée inutilisée.
